# EUROPEAN PATENT SPECIFICATION

(11) **EP 0 398 276 B1**
(45) Date of publication and mention of the grant of the patent: **24.07.1996**
(21) Application number: 90109197.5
(22) Date of filing: 16.05.1990
(51) Int. Cl.: C09D 133/00, C09D 201/02, C09D 5/00

(54) **Automotive paint sealer composition**
Zusammensetzung zur Versiegelung von Autolacküberzügen
Composition de vernis pour revêtement d'automobile

(30) Priority: 19.05.1989 US 353989
(43) Date of publication of application: 22.11.1990
(73) Proprietor: BASF Corporation, Clifton, New Jersey 07015-6001 (US)
(72) Inventor: Braun, David W., Waterville, OH 43566 (US); Vorbeck, Udo, Toledo, OH 43614 (US); Bajc, Gerald L., Perrysburg, OH 43551 (US); Finkenauer, Horst J., Waterville, OH 43566 (US)
(74) Representative: Münch, Volker, Dr.

(56) References cited:
- EP-A- 0 075 206
- AU-D- 5 451 386
- US-A- 4 276 212
- US-A- 4 397 989

## Description

### FIELD OF INVENTION

The present invention relates to auto paint sealer compositions and especially to sealer compositions consisting of low volatile organic content solvent borne coatings. Auto paint sealer compositions typically mask and fill imperfections and sand scratches over cured paint compositions and are typically used when refinishing automobiles. The instant sealer composition is preferably a two-package system and can be reactively cured with an aminoplast or isocyanate resin.

### GENERAL DESCRIPTION OF THE INVENTION

The present invention is directed to a sealer composition useful in a refinish paint layer arrangement. The sealer is composed of a copolymer which when crosslinked with isocyanate or non-isocyanate crosslinker form coatings, which have excellent physical properties with short dry time and excellent pot-life.

US-A-4,276,212 and EP-A-29598 disclose high solids coating compositions comprising a copolymer consisting of an alkyl methacrylate, a hydroxyalkyl (meth)acrylate and optionally an alkyl acrylate or styrene wherein said copolymer has a number average molecular weight of 500 to 4,500 respectively 10,000 and a glass transition temperature between - 20 to 20 °C.

US-A-4,397,989 discloses high solids coating compositions comprising an acrylic polymer with a number average molecular weight of 500 to 20,000 and a glass transition temperature between 0° to 30°C.

EP-A-75206 discloses a copolymer with a glass transition temperature between - 80 to 4,5 °C. EP-A-75206 does not indicate the molecular weight of the copolymer.

US-A-4,548,963 describes high solids coating compositions comprising a copolymer which has a number average molecular weight of 1,000 to 5,500. US-A-4,548,963 does not indicate the glass transition temperature of the copolymer.

None of these documents US-A-4,276,212, EP-A-29598, US-A-4,397,989, EP-A-75206 and US-A-4,548,963 discloses a copolymer which has been obtained by
(i) polymerizing in the presence of chain transfer agent a mixture of ethylenically unsaturated monomers containing vinyl monomers wherein at least one of the vinyl monomers has at least one acid group, thereby obtaining a polymerization product and
(ii) reacting the said polymerization product with the glycidyl ester of Versatic 10 carboxylic acid.

US-A-4,245,074 and EP-A-295784 disclose high solids coating compositions comprising a low molecular weight acrylic copolymer which could be modified with the glycidyl ester of Versatic 10 carboxylic acid. US-A-4,245,074 and EP-A-295784 do not explicitly indicate the Tg value of the copolymer.

US-A-3,549,583 discloses a coating composition comprising a copolymer modified the glycidyl ester of Versatic 10 carboxylic acid. The Tg value and the molecular weight of the copolymers are not explicitly indicated in this document.

Finally GB-B-1,515,868 discloses a high solids coating composition containing a hydroxyl-containing polymer with a number average molecular weight of about 500 to 2,000. The Tg value of the copolymer is not explicitly indicated in GB-B-1,515,868. Furthermore GB-B-1,515,868 precludes the use of chain transfer agents for the polymerization of the polymers.

### Summary of the Invention

The present invention is directed to sealer composition comprising a copolymer which, when crosslinked with isocyanate or non-isocyanate crosslinker, forms coatings, which have excellent physical properties with short dry time, excellent pot-life, and no strong mercaptan odor.

The copolymer used in the sealer composition has been obtained by reacting the polymerization product of
499 parts (21,2% by weight) of n-butyl methacrylate
674 parts (28,6% by weight) of styrene
302 parts (12,8% by weight) of hydroxyethyl methacrylte
188 parts (8,0% by weight) of acrylic acid
82,5 parts (3,5% by weight) of 2-mercaptoethanol and
40,5 parts (1,7% by weight) of 1,1'-azobis(cyano-cyclohexane)
subsequently to 572 parts (24,2% by weight) of the glycidyl ester of Versatic 10 carboxylic acid throught the organic acid groups of the acrylic acid.

The said copolymer has a moderate glass transition temperature, preferably between -3°C and 35°C (using the Fox method of Tg calculation), and a relative weight average molecular weight of less than 10,000, preferably from 1,000-7,000, based on GPC using polystyrene standards.

Especially preferred is a high solids sealer comprising 5 - 70 % copolymer and 10 - 50 % solvent and a crosslinking agent. Pigments and pigment/extenders may also be included at preferably a P/B of 2.0/1 or less.

Crosslinking agents of the sealer can also be selected from a group of aromatic or aliphatic isocyanates. These isocyanate crosslinking agents suitable for crosslinking active hydrogen bearing materials are well known in the art. Examples of the isocyanate crosslinking agents useful in this invention include but are not limited to biurets, isocyanurates or adducts of toluene diisocyanate, hexamethylene diisocyanate, isophorone diisocyanate and meta-tetramethyl xylene diisocyanate. The isocyanate crosslinking agent is contained in the sealer at preferably .75 to 1.75 isocyanate equivalents per 1.0 equivalents of active hydrogen.

Crosslinking agents of the sealer can be selected from a group of non-isocyanate crosslinking agents. One type of non-isocyanate crosslinking agent suitable for crosslinking the active hydrogen bearing materials of the sealer is an amine aldehyde crosslinking agent. Typically, these crosslinking materials are products of reactions of melamine or urea and formaldehyde and various alcohols containing up to and including four carbon atoms. The amino crosslinking agents useful for this invention are alkylated melamine-formaldehyde resins. Preferably, low amino crosslinking resins are prepared according to this invention. The alkylated melamine-formaldehyde is contained in the sealer at a preferred weight ratio 20/80 to 50/50 copolymer/alkylated melamine-formaldehyde.

Solvents used in the sealer are those which are commonly used in the art. Typical solvents useful for this invention are xylene, toluene, methyl ethyl ketone, methyl amyl ketone, propylene glycol methyl ether acetate, n-butyl acetate, n-butanol, isopropanol.

Any pigment/extender known in the art such as magnesium silicates, aluminium silicates, silicon dioxide, zinc phosphate, titanium dioxides, organics, oxides, carbon blacks as well as hollow spheres of these extenders may be used. A preferred pigment/extender is one which has a relatively low oil absorption and relatively low density.
Pigment/extenders of this type will favorably contribute towards reducing the amount of volatile organic compounds in the sealer at application viscosity.

Reactive diluents with hyxdroxyl or amine active hydrogen groups can be used in the sealer. These reactive diluents are well known in the art and a wide variety of these diluents are readily available commercially. These reactive diluents are generally lower viscosity and lower molecular weight materials. One or more of these reactive diluents can be incorporated into the sealer along with the copolymer. These low viscosity diluents serve to further lower the amount of volatile organic compounds in the sealer at application viscosity. Examples of types of these reactive diluents include but are not limited to polyesters, caprolactone polyols, graft polyols, urethane adducts, hydrolyzable oxazolidine compounds, propylene oxide and ethylene oxide based polyols. These reactive diluents can be used in the sealer at 0 - 50 % by weight of the total resin solids.

Catalysts for the isocyanate/active hydrogen crosslinking reaction can be selected from a group which includes organo-metallic and amine compounds. The catalysts are well known in the art. Examples include but are not limited to dibutyltin dioxide, zinc octoate, dibutyltin dilaurate, triethyl amine, 2-diethylamino ethanol, triethylene diamine.

Catalysts for the alkylated melamine-formaldehyde/active hydrogen crosslinking reaction can be selected from a group which includes organic and inorganic acids. Examples include but are not limited to dinonylnaphthalene disulfonic acid, p-toluene sulfonic acid, dibutyl sulfonic acid.

Additives known in the art such as wetting aids, flow agents, surfactants, defoamers, anti-foams, anti-setting aids, and the like can be incorporated into the sealer. Typical properties these additives affect are pigment dispersion, adhesion, flow and pigment settling. Examples include but are not limited to ICI Solsperse hyperdispersants such as Solsperse 5000, 12000, 20,000, 22000 and 24000; Troy Chemical Troysol CD1, Troysol CD2, Troysol 98C, Troythix Antisag 4 and Troythix Antisettle; Daniel Products Dispers-Ayd 9100; Raybo Chemical Raybo 63, Raybo 6 and Raybo 94; Byk-Chemie Anti-Terra U, Anti-Terra V, Anti-Terra 202, Anti-Terra 204, Byk W-960, Byk P-104, Byk P-104S, Byk R-405, Disperbyk 160,Disperbyk 162, Disperbyk 163, Byk 306, Byk 310, Byk 307, Byk 052 and Byk 077; Nuodex Nuosperse 657 and Nuosperse 700; Tego Chemie ZFS 460, Tego Glide 410 and Tego Glide 470; 3M FC 430 and FC 431; Bayer OL 44; Degussa Aerosil R972 and Aerosil 200; organo clays; and polyethylene wax dispersions, polypropylene wax dispersions, polyamide wax dispersions and ethylene vinyl acetate wax dispersions.

The following examples are used for illustration of the described invention and are not meant to limit in any way the scope of the invention.

### EXAMPLE I

### PART A

A mixture of 387 gms. methyl amyl ketone and 55 gms. of methyl ethyl ketone was placed in a flask fitted with agitator, three addition feed pumps, reflux condenser, thermocouple probe and inert gas inlet. The flask was purged with nitrogen and the mixture was heated to reflux (about 125-131 C) with stirring, while a slow stream of nitrogen was passed through the system.

### PART B

Each of the following was concurrently added over about 150 minutes:
1) a premixed monomer solution of 499 gms. normal butyl methacrylate, 674 gms. styrene, 302 gms. hydroxy ethyl methacrylate, 188 gms. glacial acrylic acid, and 25 gms. of methyl amyl ketone.
2) a premixed suspension/solution of 26.4 gms. 1,1′-azobis(cyanocyclohexane) and 152 gms. methyl ethyl ketone.
3) a premixed solution of 82.5 gms. 2-mercaptoethanol and 50 gms. of methyl amyl ketone.

### PART C

The polymerization was carried out at reflux with the temperature dropping throughout the addition to about 121-124 C. Immediately 37 gms. of methyl amyl ketone was used to flush the lines used for 1 and 3 above; a premixed mixture of 14.1 gms. 1,1′-azobis (cyanocyclohexane) and 82 gms. methyl ethyl ketone was added over approximately 60 minutes with temperature continuing to fall to 114 C.

### PART D

Subsequently, the material was held about 10 minutes at 110-115 C, the flask was equipped with a Barrett trap, and solvent stripped out to a temperature above 136 C, after which the heat was turned off, 572 gms. of glycidyl ester of Versatic 10 carboxylic acid and 5 gms. of methyl amyl ketone were added. Heat was again applied and the mixture heated to reflux (about 150-151 C) and held at reflux for three hours.

The properties of the resin were 79-80% non-volatile using the time, temperature, and sample weight according to ASTM 2369; 8-9 acid number based on the above non-volatile; a viscosity of K-L when reduced to 66.4% weight non-volatile with methyl ethyl ketone; and weight average relative molecular weight of approximately 3948 (GPC based on polystyrene standards).

### EXAMPLE II

A sealer was prepared in accordance with the following procedure. To 104 grams of the 80% copolymer resin solution as described in Example I, was added 44 grams of methyl amyl ketone, 10 grams of methyl ethyl ketone, 4.5 grams of propylene glycol mono methyl ether acetate and 8.8 grams of a 75% solution of bisphenol A epoxide in xylene. This mixture was stirred until it reached homogeneity. To this mixture was added 150 grams of silica-alumina ceramic hollow spheres and 62 grams of zinc phosphate. This mixture was then dispersed by sandmill to 20 to 30 microns. To this mixture was added 440 grams of the 80% copolymer solution of Example I, 131 grams of methyl amyl ketone, 29 grams of methyl ethyl ketone and 0.25 grams of catalyst. To 500 grams of this mixture was added 52.5 grams of 1,6-hexamethylene diisocyanate isocyanurate and 57.1 grams of isophorone diisocyanate isocyanurate, 12.2 grams of propylene glycol monomethyl ether acetate and 12.2 grams of xylene.

The resultant sealer was useful as a low VOC sealer composition.

The sealer had an acceptable pot-life and was suitable for wet-on-wet overcoating with refinishing topcoats after not less than fifteen minutes flash off time.

The sealer shows excellent adhesion to ferrous and non-ferrous metal, plastic, wood and OEM and refinishing coatings.

Excellent distinctness of image (DOI) and gloss were retained when a polyurethane topcoat was applied over the sealer. Acrylic enamels, non-isocyanate and/or acrylic basecoat/clearcoat finishes may also be applied over the sealer.

White low VOC topcoat, as described in related copending U.S. patent application filed was applied over the sealer after the sealer had flashed off for 15 minutes. The film was allowed to dry at ambient temperature. The resultant 20 degree gloss was 90 and the distinctness of image (DOI) was 90.

### EXAMPLE III

A sealer was prepared in accordance with the following procedure. To 253 grams of the 80% copolymer resin solution as described in Example I, was added 4.2 grams of dispersion aid, 2.1 grams of anti-settling aid, 132 grams of methyl amyl ketone, 29 grams of methyl ethyl ketone, 21.5 grams propylene glycol monomethyl ether acetate and 10.8 grams of bentonite clay. This mixture was stirred until it reached homogeneity. To this mixture was added 364 grams silica-alumina hollow spheres and 150 grams zinc phosphate. This mixture was then dispersed by sandmill to 20 to 30 microns. To this mixture was added 806 grams of the 80% copolymer solution of Example I, 213 grams of an oxazolidine reactive diluent, 339 grams of methyl amyl ketone, 75 grams of methyl ethyl ketone and 0.45 grams of catalyst. To 400 grams of this mixture was added 67.5 grams of 1,6-hexamethylene diisocyanate isocyanurate and 73.2 grams of isophorone diisocyanate isocyanurate, 15.6 grams of propylene glycol monomethyl ether acetate and 15.6 grams of xylene.

The resultant sealer was useful as a low VOC sealer composition.

The resultant sealer had an acceptable pot-life and was suitable for wet-on-wet overcoating with refinishing topcoats after not less than fifteen minutes flash off time.

The sealer shows excellent adhesion to ferrous and non-ferrous metal, plastic, wood and OEM and refinishing coatings.

Excellent distinctness of image (DOI) and gloss were retained when a polyurethane topcoat was applied over the sealer. Acrylic enamels, non-isocyanate and/or acrylic basecoat/clearcoat finishes may also be applied over the sealer.

A blue single stage polyurethane topcoat, supplied by BASF, was applied wet on wet and allowed to dry at ambient temperature. The resultant 20 degree gloss was 85 and the distinctness-of-image (DOI) was 95.

### EXAMPLE IV

A sealer is prepared in accordance with the following procedure. To 104 grams of the 80% copolymer resin solution as described in Example I, was added 44 grams of methyl amyl ketone, 10 grams of methyl ethyl ketone, 4.5 grams of propylene glycol monomethyl ether acetate. This mixture is stirred until it reaches homogeneity. To this mixture was added 150 grams of silica-alumina ceramic hollow spheres and 62 grams of zinc phosphate. This mixture is then dispersed by sandmill to 20 to 30 microns. To this mixture is added 440 grams of the 80% copolymer solution of Example I, 160 grams of n-butanol, 17.4 grams of isopropanol and 11.6 grams of acid catalyst. To 500 grams of this mixture is added 72 grams of a low amino, alkylated melamine-formaldehyde resin.

The resultant sealer is useful as a low VOC sealer composition.

The resultant sealer is suitable for wet-on-wet overcoating with refinishing topcoats after not less than fifteen minutes flash off time.

## Claims

1. A high solids sealer composition comprising 5 - 70% copolymer and 10 - 50% solvent and a crosslinking agent, wherein the said copolymer exhibits a glass transition temperature between -3°C to 35°C (using the Fox method of Tg calculation) and a relative weight average molecular weight of less than 10,000 based on GPC using polystyrene standards and wherein the said copolymer has been obtained by reacting the polymerization product of
21,2% by weight of n-butyl methacrylate
28,6% by weight of styrene
12,8% by weight of hydroxyethyl methacrylate
8,0% by weight of acrylic acid
3,5% by weight of 2-mercaptoethanol and
1,7% by weight of 1,1'-azobis(cyanocyclohexane)
subsequently to 24,2% by weight of the glycidyl ester of Versatic 10 carboxylic acid through the organic acid groups of the acrylic acid.

2. The composition of claim 1 wherein said sealer composition further incorporates at least one pigment/extender.

3. The composition of claim 2 wherein said at least one pigment/extender is contained in the sealer composition at a pigment to binder ratio of 2.0 to 1 or less.

4. The composition of claim 3 wherein alumina-silica ceramic hollow spheres comprises 0-100% by weight of the total pigment/extender.

5. The composition of claim 4 wherein said pigment/extender is comprised of 71% alumina-silica ceramic and 29% zinc phosphate, percents being by weight of the total pigment/extender.

6. The composition of claim 1 wherein said sealer composition further incorporates at least one reactive diluent.

7. The composition of claim 1 wherein said crosslinking agent is an isocyanate crosslinking agent.

8. The composition of claim 7 wherein said isocyanate crosslinking agent is selected from the group consisting of biurets, isocyanurates or adducts of toluene diisocyanate, 1,6-hexamethylene diisocyanate, isophorone diisocyanate, meta-tetramethyl xylene diisocyanate or a combination of these.

9. The composition of claim 8 wherein said isocyanate crosslinking agent is contained in the sealer composition at .75 to 1.75 isocyanate equivalents per 1.0 equivalents of active hydrogen.

10. The composition of claim 1 wherein said crosslinking agent is non-isocyanate crosslinking agent.

11. The composition of claim 10 wherein said crosslinking agent is an alkylated melamine-formaldehyde.

12. The composition of claim 11 wherein said alkylated melamine-formaldehyde is contained in the sealer composition at a weight ratio from 20/80 to 50/50 copolymer/alkylated melamine-formaldehyde.

13. The composition of claim 1 wherein said sealer composition further incorporates a catalyst for the crosslinking reaction.

14. The composition of claim 13 wherein said catalyst is selected from the group consisting of organo-metallic compounds and amine compounds such as dibutyltin dilaurate, zinc octoate, dibutyltin dioxide, triethyl amine, triethylene diamine when the crosslinking reaction is isocyanate/active hydrogen.

15. The sealer composition of claim 13 wherein said catalyst is selected from the group consisting of organic and inorganic acids such as dinonylnaphthalene disulfonic acid, p-toluene sulfonic acid and dibutyl sulfonic acid when the crosslinking reaction is amine- aldehyde/active hydrogen.

16. A substrate overcoated with a high solids sealer composition and a subsequent finish coat wherein said high solids sealer composition is such as claimed in claims 1 to 15.

## Patentansprüche

1. Festkörperreiche Vorlackzusammensetzung, enthaltend 5 - 70% Copolymerisat, 10 - 50% Lösungsmittel und ein Vernetzungsmittel, wobei das Copolymerisat eine Glasübergangstemperatur von -3°C bis 35°C (Tg-Berechnung nach Fox) und ein mittels GPC unter Verwendung von Polystyrolstandards bestimmtes relatives gewichtsmittleres Molekulargewicht unter 10.000 aufweist und durch nachträgliche Umsetzung des Produkts der Polymerisation von
21,2 Gew.-% n-Butylmethacrylat,
28,6 Gew.-% Styrol,
12,8 Gew.-% Hydroxyethylmethacrylat,
8,0 Gew.-% Acrylsäure,
3,5 Gew.-% 2-Mercaptoethanol und
1,7 Gew.-% 1,1'-Azobis(cyanocyclohexan)
mit 24,2 Gew.-% des Glycidylesters der Versatic-10-carbonsäure, wobei die Reaktion über die organischen Säuregruppen der Acrylsäure erfolgt, erhalten wurde.

2. Zusammensetzung nach Anspruch 1, dadurch gekennzeichnet, daß weiter mindestens ein Pigmentfüllstoff enthalten ist.

3. Zusammensetzung nach Anspruch 2, dadurch gekennzeichnet, daß der mindestens eine Pigmentfüllstoff in einem Verhältnis von Pigment zu Bindemittel von 2,0 zu 1 oder weniger enthalten ist.

4. Zusammensetzung nach Anspruch 3, dadurch gekennzeichnet, daß die Gesamtmenge an Pigmentfüllstoff zu 0-100 Gew.-% aus Aluminiumoxid-Siliciumdioxid-Keramik-Hohlkugeln besteht.

5. Zusammensetzung nach Anspruch 4, dadurch gekennzeichnet, daß der Pigmentfüllstoff aus 71 Gew.-% Aluminiumoxid-Siliciumdioxid-Keramik und 29 Gew.-% Zinkphosphat, bezogen auf das Gewicht der Gesamtmenge an Pigmentfüllstoff, besteht.

6. Zusammensetzung nach Anspruch 1, dadurch gekennzeichnet, daß weiter mindestens ein Reaktivverdünner enthalten ist.

7. Zusammensetzung nach Anspruch 1, dadurch gekennzeichnet, daß es sich bei dem Vernetzungsmittel um ein Isocyanat-Vernetzungsmittel handelt.

8. Zusammensetzung nach Anspruch 7, dadurch gekennzeichnet, daß das Isocyanat-Vernetzungsmittel aus der Gruppe bestehend aus Biuretverbindungen, Isocyanuraten oder Addukten von Toluoldiisocyanat, 1,6-Hexamethylendiisocyanat, Isophorondiisocyanat, meta-Tetramethylxyloldiisocyanat oder einer Kombination aus diesen ausgewählt ist.

9. Zusammensetzung nach Anspruch 8, dadurch gekennzeichnet, daß das Isocyanat-Vernetzungsmittel in einer Menge von 0,75 bis 1,75 Isocyanat-Äquivalenten auf 1,0 Äquivalente aktiven Wasserstoff enthalten ist.

10. Zusammensetzung nach Anspruch 1, dadurch gekennzeichnet, daß es sich bei dem Vernetzungsmittel um ein Nicht-Isocyanat-Vernetzungsmittel handelt.

11. Zusammensetzung nach Anspruch 10, dadurch gekennzeichnet, daß es sich bei dem Vernetzungsmittel um ein alkyliertes Melamin-Formaldehyd handelt.

12. Zusammensetzung nach Anspruch 11, dadurch gekennzeichnet, daß das alkylierte Melamin-Formaldehyd in einem Gewichtsverhältnis von Copolymerisat zu alkyliertem Melamin-Formaldehyd von 20/80 bis 50/50 enthalten ist.

13. Zusammensetzung nach Anspruch 1, dadurch gekennzeichnet, daß weiter ein Vernetzungskatalysator enthalten ist.

14. Zusammensetzung nach Anspruch 13, dadurch gekennzeichnet, daß im Fall einer Vernetzungsreaktion zwischen Isocyanat und aktivem Wasserstoff der Katalysator aus der Gruppe bestehend aus organometallischen und Aminverbindungen, wie Dibutylzinndilaurat, Zinkoctoat, Dibutylzinndioxid, Triethylamin, Triethylendiamin ausgewählt ist.

15. Zusammensetzung nach Anspruch 13, dadurch gekennzeichnet, daß im Fall einer Vernetzungsreaktion zwischen Amin-Aldehyd und aktivem Wasserstoff der Katalysator aus der Gruppe bestehend aus organischen und anorganischen Säuren, wie Dinonylnaphthalindisulfonsäure, p-Toluolsulfonsäure und Dibutylsulfonsäure ausgewählt ist.

16. Mit einer feststoffreichen Vorlackzusammensetzung und einem nachfolgenden Decklack beschichtetes Substrat, dadurch gekennzeichnet, daß es sich bei der feststoffreichen Lackzusammensetzung um eine nach den Ansprüchen 1 bis 15 handelt.

## Revendications

1. Composition d'imprégnation à forte teneur en matières solides comprenant 5-70% de copolymère et 10-50% de solvant et un agent de réticulation, dans laquelle ledit copolymère présente une température de transition vitreuse comprise entre -3°C et 35°C (en utilisant la méthode de Fox pour le calcul de la Tg) et une masse moléculaire moyenne en poids relative inférieure à 10 000, mesurée par CPG à l'aide d'étalons de polystyrène, et dans laquelle ledit copolymère a été obtenu par la réaction du produit de polymérisation de
21,2% en poids de méthacrylate de n-butyle
28,6% en poids de styrène
12,8% en poids de méthacrylate d'hydroxyéthyle
8,0% en poids d'acide acrylique
3,5% en poids de 2-mercaptoéthanol et
1,7% en poids de 1,1'-azobis(cyanocyclohexane)
avec 24,2% en poids d'ester glycidylique de l'acide carboxylique Versatic 10 par l'intermédiaire des groupes acides organiques de l'acide acrylique.

2. Composition selon la revendication 1, dans laquelle ladite composition d'imprégnation contient en outre au moins un pigment/charge.

3. Composition selon la revendication 2, dans laquelle ledit pigment/charge, au nombre d'au moins un, est contenu dans la composition d'imprégnation dans un rapport du pigment au liant de 2,0 à 1 où moins.

4. Composition selon la revendication 3, dans laquelle des sphères creuses en matière céramique d'alumine-silice constituent 0-100% en poids du pigment/charge total.

5. Composition selon la revendication 4, dans laquelle ledit pigment/charge est constitué de 71% de matière céramique d'alumine-silice et de 29% de phosphate de zinc, les pourcentages étant en poids du pigment/charge total.

6. Composition selon la revendication 1, dans laquelle ladite composition d'imprégnation comprend en outre au moins un diluant réactif.

7. Composition selon la revendication 1, dans laquelle ledit agent de réticulation est un agent de réticulation de type isocyanate.

8. Composition selon la revendication 7, dans laquelle ledit agent de réticulation de type isocyanate est choisi dans le groupe constitué par les biurets, les isocyanurates ou des produits d'addition de toluène diisocyanate, de 1,6-hexaméthylène diisocyanate, d'isophorone diisocyanate, de méta-tétraméthylxylène diisocyanate ou une combinaison de ceux-ci.

9. Composition selon la revendication 8, dans laquelle ledit agent de réticulation de type isocyanate est contenu dans la composition d'imprégnation à raison de 0,75 à 1,75 équivalents d'isocyanate pour 1,0 équivalent d'hydrogène actif.

10. Composition selon la revendication 1, dans laquelle ledit agent de réticulation est un agent de réticulation de type non isocyanate.

11. Composition selon la revendication 10, dans laquelle ledit agent de réticulation est une mélamine-formaldéhyde alkylée.

12. Composition selon la revendication 11, dans laquelle ladite mélamine-formaldéhyde alkylée est contenue dans la composition d'imprégnation dans un rapport pondéral copolymère/mélamine-formaldéhyde alkylée de 20/80 à 50/50.

13. Composition selon la revendication 1, dans laquelle ladite composition d'imprégnation comprend en outre un catalyseur pour la réaction de réticulation.

14. Composition selon la revendication 13, dans laquelle ledit catalyseur est choisi dans le groupe constitué par des composés organométalliques et des composés amines, tels que le dilaurate de dibutyl-étain, l'octoate de zinc, le dioxyde de dibutyl-étain, la triéthylamine, la triéthylènediamine, lorsque la réaction de réticulation met en jeu un isocyanate et un atome d'hydrogène actif.

15. Composition d'imprégnation selon la revendication 13, dans laquelle ledit catalyseur est choisi dans le groupe constitué par des acides organiques et minéraux, tels que l'acide dinonylnaphtalène-disulfonique, l'acide p-toluènesulfonique et l'acide dibutylsulfonique lorsque la réaction de réticulation met en jeu une résine amine-aldéhyde et un atome d'hydrogène actif.

16. Substrat revêtu d'une composition d'imprégnation à forte teneur en matières solides puis d'une couche de finition, dans lequel ladite composition d'imprégnation à forte teneur en matières solides est telle que revendiquée dans les revendications 1 à 15.
